(19) Europäisches Patentamt
European Patent Office
Office européen des brevets

(11) EP 4 723 144 A1

(12) **EUROPEAN PATENT APPLICATION**
published in accordance with Art. 153(4) EPC

(43) Date of publication:
08.04.2026 Bulletin 2026/15

(51) International Patent Classification (IPC):
*H01B 17/56* (2006.01)   *C09J 7/22* (2018.01)
*C09J 7/29* (2018.01)   *C09J 7/30* (2018.01)
*C09J 7/38* (2018.01)   *C09J 11/04* (2006.01)
*C09J 201/00* (2006.01)

(21) Application number: 24831895.8

(22) Date of filing: 24.06.2024

(52) Cooperative Patent Classification (CPC):
C09J 7/22; C09J 7/29; C09J 7/30; C09J 7/38;
C09J 11/04; C09J 201/00; H01B 17/56

(86) International application number:
PCT/JP2024/022794

(87) International publication number:
WO 2025/005034 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.06.2023  JP 2023107332

(71) Applicant: Nitto Shinko Corporation
Sakai-shi, Fukui 910-0381 (JP)

(72) Inventors:
• KATO, Osamu
Sakai-shi, Fukui 910-0381 (JP)
• TOKUNAGA, Risako
Sakai-shi, Fukui 910-0381 (JP)

(74) Representative: Stolmár & Partner
Patentanwälte PartG mbB
Blumenstraße 17
80331 München (DE)

(54) **INSULATING SHEET AND MOTOR**

(57) Provided is an insulating sheet including: two outer layers disposed to be opposed to each other; two adhesive layers disposed to be opposed to each other between the two outer layers; and a substrate layer disposed between the two adhesive layers, in which the two adhesive layers both include an inorganic filler.

Ｆｉｇ．１

**Description**

CROSS-REFERENCE TO RELATED APPLICATION

This application claims priority to Japanese Patent Application No. 2023-107332, the disclosure of which is incorporated herein by reference in its entirety.

FIELD

The present invention relates to an insulating sheet as, for example, a component of a motor, and a motor including the insulating sheet.

BACKGROUND

Conventionally known is an insulating sheet including: a substrate layer; two outer layers disposed to be opposed respectively to one surface and an other surface of the substrate layer; and two adhesive layers respectively disposed between one of the outer layers and the substrate layer and between the other one of the outer layers and the substrate layer.

Known as the insulating sheet of this type is, for example, a motor insulating sheet. As the motor insulating sheet of this type, known is, for example, a five-layer insulating sheet including: a substrate layer made of a polyester-based film; two adhesive layers made of an acrylic adhesive; and two outer layers respectively adhering to one surface side and the other surface side of the substrate layer via the respective two adhesive layers (for example, Patent Literature 1).

The insulating sheet described in Patent Literature 1 has the outer layers adhering to the adhesive layers.

CITATION LIST

Patent Literature

Patent Literature 1: JP 2006-262687 A

SUMMARY

Technical Problem

However, the insulating sheet described in Patent Literature 1 does not necessarily have good thermal conductivity. Demanded therefore is an insulating sheet having good thermal conductivity and good adhesiveness between the outer layers and the adhesive layers.

In view of the above problems, demands, and the like, it is an object of the present invention to provide an insulating sheet having good thermal conductivity and good adhesiveness between an outer layer and an adhesive layer. It is also an object to provide a motor including the insulating sheet.

Solution to Problem

In order to achieve the above object, an insulating sheet according to the present invention includes: two outer layers disposed to be opposed to each other; two adhesive layers disposed to be opposed to each other between the two outer layers; and a substrate layer disposed between the two adhesive layers, in which the two adhesive layers both include an inorganic filler.

A motor according to the present invention includes the above insulating sheet.

BRIEF DESCRIPTION OF DRAWINGS

Fig. 1 is a schematic cross-sectional view of an insulating sheet according to an embodiment of the present invention obtained by cutting the insulating sheet in its thickness direction.
Fig. 2 is a perspective view of a stator of a drive motor.

DESCRIPTION OF EMBODIMENTS

A description will be hereinafter given on an embodiment of an insulating sheet according to the present invention with reference to the drawings.

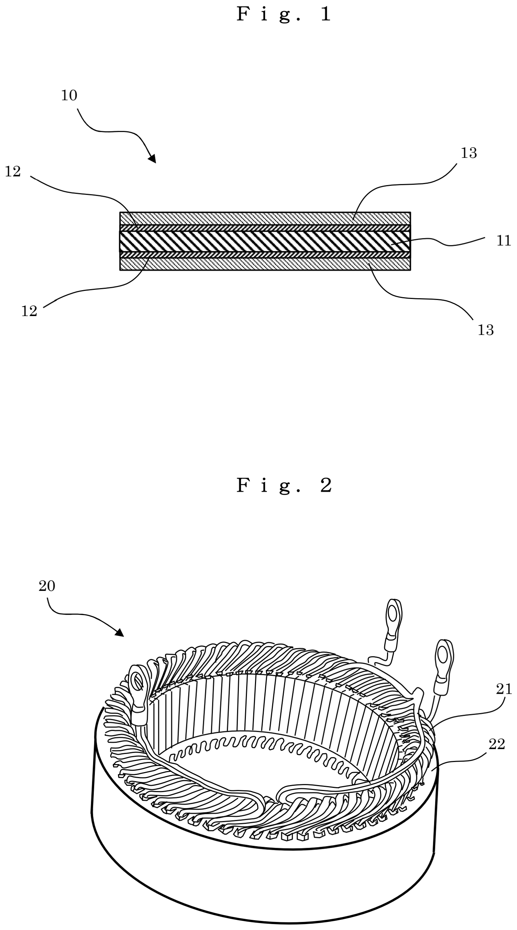

As shown in Fig. 1, an insulating sheet 10 of this embodiment includes: two outer layers 13 disposed to be opposed to each other; two adhesive layers 12 disposed to be opposed to each other between the two outer layers 13; and a substrate layer 11 disposed between the two adhesive layers 12. In other words, the insulating sheet 10 of this embodiment includes: one substrate layer 11; two adhesive layers 12 disposed to have the substrate layer 11 sandwiched therebetween in a thickness direction; and two outer layers 13 disposed to have the two adhesive layers 12 sandwiched therebetween in the thickness direction. In this embodiment, the substrate layer 11 and one of the adhesive layers 12 are in direct contact with each other, and the substrate layer 11 and the other one of the adhesive layers 12 are in direct contact with each other. The one of the adhesive layers 12 and one of the outer layers 13 are in direct contact with each other on one surface side of the substrate layer 11, and the other one of the adhesive layers 12 and the other one of the outer layers 13 are in direct contact with each other on the other surface side thereof. Each of the outer layers 13 can be an outermost layer of the insulating sheet 10.

The insulating sheet 10 has a thickness of, for example, 50 $\mu$m or more and 500 $\mu$m or less. The thickness of the insulating sheet 10 can be 100 $\mu$m or more, can be 150 $\mu$m or more. The thickness of the insulating sheet 10 can be 450 $\mu$m or less, can be 400 $\mu$m or less. The thickness of the insulating sheet 10 is preferably 150 $\mu$m or more, more preferably 200 $\mu$m or more, in terms of achieving an improved workability when the insulating sheet 10 is inserted into a slot of a stator (to be described in detail later).

The substrate layer 11 can have a thickness of, for example, 25 $\mu$m or more and 200 $\mu$m or less. The thickness of the substrate layer 11 is preferably 100 $\mu$m or less.

Each of the adhesive layers 12 can have a thickness of, for example, 1 $\mu$m or more and 150 $\mu$m or less. The thickness of the adhesive layer 12 is preferably 5 $\mu$m or more and 100 $\mu$m or less, more preferably 25 $\mu$m or more and 80 $\mu$m or less. It is preferable that a difference in thickness be small between one and the other of the two adhesive layers 12. For example, the one adhesive layer 12 can be 0.9 times or more and 1.1 times or less as thick as the other adhesive layer 12.

Each of the outer layers 13 can have a thickness of, for example, 10 $\mu$m or more and 200 $\mu$m or less. The thickness of each of the outer layers 13 is preferably 20 $\mu$m or more and 125 $\mu$m or less, more preferably 25 $\mu$m or more and 75 $\mu$m or less. It is preferable that a difference in thickness be small between one and the other of the two outer layers 13. For example, the one outer layer 13 can be 0.9 times or more and 1.1 times or less as thick as the other outer layer 13.

The thickness of each of the layers above refers to an average thickness. The thickness of each layer is determined by averaging the thicknesses of at least five portions randomly selected from the layer. The same applies to determining the thickness of any layer. The thickness of each layer can be measured by, for example, observing a lateral side or a cross section of the insulating sheet 10 with a digital microscope.

A ratio of the thickness of the substrate layer 11 to a total thickness of the insulating sheet 10 can be 0.10 or more, can be 0.15 or more. Such a thickness ratio can be 0.50 or less, can be 0.40 or less. The insulating sheet 10 with such a ratio being 0.15 or more can advantageously achieve more improved electrical insulation properties.

A ratio of a total thickness of the adhesive layers 12 (the thickness of the two layers) to the total thickness of the insulating sheet 10 can be 0.10 or more, can be 0.15 or more, can be 0.20 or more, can be 0.30 or more. Such a ratio can be 0.70 or less, can be 0.60 or less. The insulating sheet 10 with such a ratio being 0.30 or more can advantageously achieve a more improved thermal conductivity.

A ratio of a total thickness of the outer layers 13 (the thickness of the two layers) to the total thickness of the insulating sheet 10 is preferably 0.10 or more. Such a ratio can be 0.70 or less, can be 0.50 or less. The insulating sheet 10 with such a ratio being 0.50 or less can advantageously achieve a more improved thermal conductivity.

It is preferable that the above numerical range for the ratio of the thickness of each adhesive layer 12 to the thickness of each outer layer 13 be satisfied on at least one of the one surface side and the other surface side of the substrate layer 11. It is more preferable that the ratio of the thickness of each adhesive layer 12 to the thickness of each outer layer 13 fall within the above numerical range on each of both the one surface side and the other surface side of the substrate layer 11.

The substrate layer 11 in this embodiment is a resin film. Examples of the resin film include a heat-resistant resin film such as a polyimide resin film, and a polyester resin film. The resin film is preferably a polyester resin film.

Examples of the polyester resin film include a film made of a polymer of a dicarboxylic acid such as terephthalic acid or 2,6-naphthalenedicarboxylic acid, and a diol such as ethylene glycol, 1,3-propanediol, 1,4-butanediol, or 1,4-cyclohexanedimethanol. Specifically, examples of the polyester resin film include a polyethylene terephthalate resin (PET) film and a polyethylene naphthalate resin (PEN) film.

The substrate layer 11 is more preferably a polyethylene naphthalate resin film.

The substrate layer 11 can be a single layer as in this embodiment, or can be a laminate film in which a plurality of the resin films are layered on each other.

As the substrate layer 11, employed can be, for example, a commercially available product such as "Teonex" series (manufactured by TOYOBO Co., Ltd.).

The two adhesive layers 12 forming the insulating sheet 10 of this embodiment both include an inorganic filler, and further include, for example, a polymer component (adhesive component), a crosslinking agent, and a tackifier.

Each of the adhesive layers 12 can include 20 volume % or more and 60 volume % or less of the inorganic filler. The content of the inorganic filler in the adhesive layer 12 is preferably 25 volume % or more. This advantageously achieves a more improved thermal conductivity of the adhesive layer 12. The content of the inorganic filler is preferably 50 volume % or less, more preferably 45 volume % or less. This advantageously enables the adhesive layer 12 and the outer layer 13 to adhere to each other more sufficiently. The above value in volume % is calculated from the mass and specific gravity of each material. Specifically, the value is calculated according to the following formula:

$$\text{Inorganic filler content [volume \%]} =$$

$$100 \times (A / A') \, [ \, (A / A') + (B / B') ]$$

A: Mass of inorganic filler, A': Specific gravity of inorganic filler,
B: Mass of polymer component, B': Specific gravity of polymer component

Examples of the inorganic filler include a magnesium carbonate filler and an alumina filler. The inorganic filler preferably includes at least the magnesium carbonate filler.

The shape of each particle of the inorganic filler is not particularly limited. The shape of each particle can be, for example, a spherical shape, a needle shape, a plate shape, or an irregular shape (i.e., shape that cannot be specified). The spherical shape includes a perfectly spherical shape and an elliptically spherical shape.

Examples of the polymer component include an acrylic polymer.

The acrylic polymer is preferably a polymer formed by polymerizing at least an alkyl (meth)acrylate. The acrylic polymer can be, for example, a polymer of an alkyl (meth)acrylate, or a copolymer of an alkyl (meth)acrylate with another polymerizable monomer. The term "(meth)acrylate" herein includes both "acrylate" and "methacrylate".

Examples of the alkyl (meth)acrylate include methyl (meth)acrylate, ethyl (meth)acrylate, propyl (meth)acrylate [e.g., normal propyl (meth)acrylate, isopropyl (meth)acrylate], butyl (meth)acrylate [e.g., normal butyl (meth)acrylate, isobutyl (meth)acrylate, secondary butyl (meth)acrylate, tertiary butyl (meth)acrylate], 2-ethylhexyl (meth)acrylate, normal octyl (meth)acrylate, normal nonyl (meth)acrylate, and isononyl (meth)acrylate.

Examples of the other polymerizable monomer include ethylene, styrene, vinyl chloride, acrylic acid, butadiene, and acrylonitrile.

Examples of the copolymer include an ethylene-alkyl (meth)acrylate copolymer, an ethylene-alkyl (meth) acrylate-acrylic acid copolymer, a styrene-alkyl (meth)acrylate-acrylic acid copolymer, an alkyl (meth)acrylate-vinyl chloride copolymer, an alkyl (meth)acrylate-acrylic acid copolymer, an alkyl (meth)acrylate-vinyl chloride copolymer, a styrene-alkyl (meth)acrylate-butadiene copolymer, and an alkyl (meth)acrylate-acrylonitrile copolymer.

The acrylic polymer is preferably polybutyl acrylate (PAB), which is a polymer of at least butyl meth(acrylate). The polybutyl acrylate (PAB) can have a carboxy group or a hydroxy group in its molecule.

The acrylic polymers can be individually used, or two or more of them can be used in combination.

Examples of the crosslinking agent include an isocyanate compound.

The isocyanate compound is preferably a polyfunctional isocyanate compound. Such a polyfunctional isocyanate compound is a compound having a plurality of isocyanate groups in the molecule. Examples of the polyfunctional isocyanate compound include diphenylmethane isocyanate, tolylene diisocyanate, and hexamethylene diisocyanate. The polyfunctional isocyanate compound can be an adduct in which a tolylene diisocyanate trimer is added to trimethylolpropane.

Examples of the tackifier include petroleum-based resins such as an aliphatic copolymer, an aromatic copolymer, an aliphatic-aromatic copolymer, and an alicyclic copolymer. Further examples include a coumarone-indene resin, a terpene resin, a terpene phenol resin, a rosin resin such as a polymerized rosin, an alkylphenol resin, a xylene resin, and a hydrogenated product thereof. The tackifiers can be individually used, or two or more of them can be used in combination.

The adhesive layer 12 preferably includes a polymer compound, which is a crosslinked reaction product of the polybutyl acrylate (PAB) as the polymer component and the isocyanate compound as the crosslinking agent. The adhesive layer 12 more preferably includes a crosslinked reaction product of polybutyl acrylate (PAB) and the isocyanate compound, and the alkylphenol resin as the tackifier. This increases tight adhesiveness between the adhesive layer 12 and the outer layer 13 (in particular aromatic polyamide paper). The amount of the alkylphenol resin added is preferably 1 mass part or more and 50 mass parts or less, more preferably 30 mass parts or less, based on 100 mass parts of polybutyl acrylate (PAB). The polybutyl acrylate (PAB) can have a carboxy group in the molecule.

The adhesive layer 12 can have a weight per unit area of, for example, 20 g/m$^2$ or more and 240 g/m$^2$ or less.

The adhesive layer 12 can be made of, for example, a commercially available polymer. The adhesive layer 12 can be made of, for example, a polymer composition in which a plurality of types of polymers are crosslinked with each other.

The two outer layers 13 forming the insulating sheet 10 of this embodiment are both preferably made of aromatic polyamide paper. The insulating sheet 10 of this embodiment having the outer layers 13 made of aromatic polyamide paper can have good heat resistance. Further, the insulating sheet 10 of this embodiment after being disposed in, for example, a slot of a motor stator can have good slipping performance when a coil wire is inserted.

As the aromatic polyamide paper, employed can be, for example, fully aromatic polyamide paper made from at least one of short fibers made of fully aromatic polyamide and synthetic pulp made of fully aromatic polyamide; a sheet including mica powder (mica flakes) and at least one of short fibers made from aromatic polyamide and synthetic pulp made from aromatic polyamide; or a sheet obtained by subjecting the paper or sheet to high-temperature and high-pressure calender processing. As the aromatic polyamide paper, fully aromatic polyamide paper is preferable so that the insulating sheet 10 can have better heat resistance. Examples of the fully aromatic polyamide forming the above short fibers or the above synthetic pulp include a condensation polymer of m-phenylenediamine and isophthalic acid, and a condensation polymer of p-phenylenediamine and terephthalic acid.

Each of the outer layers 13 can be subjected to, for example, lamination or surface treatment. The surface treatment can be carried out using a coating agent including, for example, a polyamide resin (e.g., a methoxymethylated polyamide resin in which the amide group is methoxymethylated). As the outer layer 13, for example, a commercially available product (e.g., product name "Nomex" manufactured by DuPont) can be employed.

The insulating sheet 10 of this embodiment has a volume resistivity of, for example, $1 \times 10^{13}\,\Omega\cdot$cm or more. The volume resistivity of the insulating sheet 10 is preferably $1 \times 10^{14}\,\Omega\cdot$cm or more.

The insulating sheet 10 of this embodiment has good thermal conductivity and has relatively high adhesive strength between the outer layer 13 and the adhesive layer 12. The adhesive layer 12 including the above acrylic polymer can achieve even higher adhesive strength. The adhesive layer 12 including the magnesium carbonate filler as the inorganic filler can impart more sufficient thermal conductivity to the insulating sheet 10.

Next, a description will be given on a method for producing the insulating sheet 10 of this embodiment.

In the method for producing the insulating sheet 10 of this embodiment, for example, a mixture including the components to form the adhesive layer 12 and an organic solvent (as needed) is prepared, the mixture is applied to both surfaces of the substrate layer 11, and the organic solvent included in the applied mixture is volatilized (as needed) to prepare two adhesive layers 12. Further, the outer layers 13 are attached to the respective adhesive layers 12 to be thereby capable of producing the insulating sheet 10. As a coating apparatus, for example, a roll coater can be used.

As the organic solvent, used can be, for example, ethyl acetate, methyl ethyl ketone (MEK), or toluene.

When the mixture including the organic solvent is applied to the outer layers 13, a general application method such as a die coating method or a reverse coating method can be employed. The temperature during the application is, for example, room temperature (15 to 25 °C).

The insulating sheet 10 produced as above is used as, for example, a component of a motor. The insulating sheet 10 can be used, for example, as an insulating sheet for a drive motor of an automobile. Specifically, the insulating sheet 10 can be used as slot insulating paper for a motor stator. The insulating sheet 10 can be used, for example, in a heated state.

Examples of the automobile include a hybrid electric vehicle (HEV) and an electric vehicle (EV). Examples of the drive motor include an HV motor, a motor generator, an alternator, a 4WD motor, an oil pump motor, an EPS motor, a compressor motor, and an in-wheel motor.

Next, a description will be given on an embodiment of the motor of the present invention with reference to the drawings.

The motor of this embodiment includes the insulating sheet 10 described above. The insulating sheet 10 is, for example, a motor insulating sheet.

For example, the motor is a drive motor mounted on a hybrid electric vehicle, an electric vehicle, or the like.

The drive motor for an automobile includes a rotor with a permanent magnet, and a stator 20 configured to generate force to rotate the rotor. As shown in Fig. 2, the stator 20 includes a coil 21 and a stator core 22. The stator 20 is configured to rotate the rotor by creating a magnetic field around the coil 21.

In the drive motor as above, the coil 21 is formed of, for example, a plurality of segment conductors connected to each other. In the drive motor as above, a core such as the stator core 22 or a rotor core has a plurality of slot grooves, and the coil 21 is housed in the plurality of slot grooves. In the drive motor as above, the motor insulating sheet is used to ensure insulation between the coil 21 and an inner wall surface of each of the slot grooves. The motor insulating sheet and the coil 21 are housed in the corresponding slot groove. Specifically, the motor insulating sheet is housed in the slot groove in a state of being wrapped around the coil 21. The coil 21 with the motor insulating sheet wrapped therearound is fixed within the slot groove via an insulating resin (e.g., epoxy varnish) impregnated in the slot groove.

The insulating sheet and motor of this embodiment have been as exemplified above, but the present invention is not limited to the insulating sheet or motor exemplified above. That is, various configurations used in a general insulating sheet or motor can be employed without impairing the effect of the present invention.

The matters disclosed herein include the following:

(1) An insulating sheet including: two outer layers disposed to be opposed to each other; two adhesive layers disposed to be opposed to each other between the two outer layers; and a substrate layer disposed between the two adhesive layers, in which the two adhesive layers both include an inorganic filler. The insulating sheet configured as above has good thermal conductivity and relatively large adhesive strength between the outer layers and the adhesive layers.

(2) The insulating sheet according to (1) above, in which each of the two adhesive layers includes 20 volume % or more and 50 volume % or less of the inorganic filler.

(3) The insulating sheet according to (1) or (2) above, in which the inorganic filler has a particle shape being a spherical shape.

(4) The insulating sheet according to any of (1) to (3) above, in which each of the two outer layers is aromatic polyamide paper.

(5) The insulating sheet according to any of (1) to (4) above, in which both of the two adhesive layers include an acrylic polymer.

(6) The insulating sheet according to (5) above, in which the acrylic polymer is an acrylic polymer formed by polymerizing at least an alkyl (meth)acrylate.

(7) The insulating sheet according to (6) above, in which the adhesive layers include: a polymer compound being a crosslinked reaction product between polybutyl acrylate (PAB), which is a polymer of butyl (meth)acrylate as the alkyl (meth)acrylate, and an isocyanate compound as the crosslinking agent; and an alkylphenol resin as a tackifier.

(8) The insulating sheet according to any of (1) to (7) above, in which the substrate layer is a polyethylene naphthalate resin film.

(9) A motor including the insulating sheet according to any of (1) to (8) above.

EXAMPLES

Next, a description on the present invention will be given in more detail by way of experimental examples, but the present invention is not limited thereto.

Materials or raw materials of an outer layer, an adhesive layer, and a substrate layer for producing an insulating sheet are shown below.

<Material of outer layer>

[Fully aromatic polyamide paper (PA paper)]

Thickness: 40 $\mu$m per layer commercially available product

<Raw materials of adhesive layer>

[Inorganic fillers]

- Anhydrous magnesium carbonate filler (particle shape: irregular)
  Product name: MAGTHERMO MS-S (manufactured by Konoshima Chemical Co., Ltd.)
- Alumina filler (particle shape: spherical)
  Mixed raw material of product name "AW-17-25" and product name "AX3-32" (both manufactured by Micron, Inc.) at 70 : 30 (mass ratio)

[Polymer component]

100 mass parts of polybutyl acrylate (PAB) (commercially available product)

[Crosslinking agent]

5 mass parts of polyisocyanate compound (commercially available product)

[Tackifier]

20 mass parts of alkylphenol resin (commercially available product)

<Materials of substrate layer>

- Polyethylene naphthalate resin film (PEN)

Product name: "Teonex Q51" (manufactured by TOYOBO Co., Ltd.) Thickness: 50 μm

(Examples 1 to 9 and Comparative Examples 1 to 3)

Table 1 and Table 2 respectively show the configurations (such as the thickness and material of each layer) of the insulating sheets of the Examples and the Comparative Examples. The insulating sheet of any of the Examples and the Comparative Examples has a five-layer laminated structure as shown in Fig. 1. Each of Comparative Examples 1 to 3 has a single-layer structure of a resin film.

<Production of insulating sheet>

A mixture including the components to form an adhesive layer and an organic solvent (methyl ethyl ketone (MEK)) was prepared. This mixture was applied to one surface of the substrate layer using a bar coater so that the adhesive layer after being dried had a specific thickness. The organic solvent in the applied mixture was volatilized (dried) by a drying treatment at 110 °C for three minutes to form the adhesive layer on the one surface of the substrate layer. Further, an outer layer was attached to the adhesive layer to form a three-layer insulating sheet. Subsequently, the adhesive layer and the outer layer were formed on the other surface of the substrate layer in the same manner as above. The insulating sheet having a five-layer structure was thus produced.

Table 1

| | | Ex. 1 | Ex. 2 | Ex. 3 | Ex. 4 | Ex. 5 | Ex. 6 |
|---|---|---|---|---|---|---|---|
| Thickness of each adhesive layer | [μm] | 70 | 50 | 30 | 70 | 70 | 70 |
| Filler | Type | $MgCO_3$ | $MgCO_3$ | $MgCO_3$ | $MgCO_3$ | $MgCO_3$ | $MgCO_3$ |
| Filler content | [vol%] | 50 | 50 | 50 | 45 | 40 | 35 |
| Insulating sheet thickness | [μm] | 270 | 230 | 190 | 270 | 270 | 270 |
| Evaluation result | | | | | | | |
| Thermal conductivity | [W/mK] | 0.33 | 0.29 | 0.25 | 0.32 | 0.31 | 0.29 |
| Peeling strength | [N/25mm] | 4.2* | 3.7* | 3.9* | 7.3 | 6.8 | 6.4 |
| Peeling occurred at an interface in Examples with *, and cohesive failure occurred in other Examples and Comparative Examples | | | | | | | |

Table 2

| | | Ex. 7 | Ex. 8 | Ex. 9 | C. Ex. 1 | C. Ex. 2 | C. Ex. 3 |
|---|---|---|---|---|---|---|---|
| Thickness of each adhesive layer | [μm] | 70 | 70 | 70 | 70 | 50 | 30 |
| Filler | Type | $MgCO_3$ | $MgCO_3$ | $Al_2CO_3$ | - | - | - |
| Filler content | [vol%] | 30 | 25 | 50 | 0 | 0 | 0 |
| Insulating sheet thickness | [μm] | 270 | 270 | 270 | 270 | 230 | 190 |
| Evaluation result | | | | | | | |
| Thermal conductivity | [W/mK] | 0.27 | 0.25 | 0.33 | 0.17 | 0.17 | 0.17 |
| Peeling strength | [N/25mm] | 6.3 | 6.9 | 6.6 | 6.3 | 6.8 | 7.0 |

The insulating sheet produced in each of the Examples and the Comparative Examples was evaluated for thermal conductivity, and adhesive strength between each of the outer layers and each of the adhesive layers.

<Evaluation of insulating sheet for thermal conductivity>

The thermal conductivity of each insulating sheet was measured at 62.5°C by the guarded heat flow meter technique (steady-state method) in accordance with ASTM E1530.

<Adhesive strength (peeling force) between outer layer and adhesive layer of insulating sheet>

For each insulating sheet, the peeling force (peeling strength) between the outer layer and the adhesive layer was measured as follows. Specifically, the peeling force was measured when the outer layer was pulled using a tensile tester at a peeling angle of 180° at a peeling rate of 100 mm/min. The temperature during the measurement was 23 °C.

The test results are shown in Table 1 and Table 2. As can be seen from Table 1 and Table 2, the insulating sheet of each of the Examples had higher thermal conductivity and higher adhesive strength between the outer layer and the adhesive layer than those of the insulating sheet of each of the Comparative Examples.

As can be seen from the results of Example 1, Examples 4 to 8, and Comparative Example 1, the configuration that the content of the anhydrous magnesium carbonate filler in the adhesive layer was less than 50 volume % exhibited better peeling strength while the aromatic polyamide paper (outer layer) underwent cohesive failure in the peeling strength test. The content of the anhydrous magnesium carbonate filler in the adhesive layer can be particularly preferably 25 volume % or more and 45 volume % or less. As can be seen from the results of Examples 1 and 9, when the adhesive layer included 50 volume % of the inorganic filler, peeling occurred at an interface between the outer layer and the adhesive layer in Example 1 while cohesive failure occurred in the outer layer in Example 9 in the peeling strength test. This is thought to result from the particle shape of the inorganic filler. It is thought that the particle shape being a spherical shape rather than an irregular shape resulted in a reduced specific surface area of the filler particles and a reduced amount of the polymer component (adhesive component) adhering to the surfaces of the particles, thereby increasing the adhesive strength between the outer layer and the adhesive layer. The particle shape of the inorganic filler seems to preferably be a spherical shape. As can be seen from the results of Examples 2, 3, 6, and 8 and Comparative Examples 1 to 3, the thermal conductivity does not depend on the thickness of the adhesive layer when the adhesive layer includes no inorganic filler (Comparative Examples 1 to 3). On the other hand, when the content of the inorganic filler is set to a smaller content, the adhesive layer including the inorganic filler still exhibits substantially the same thermal conductivity by increasing the thickness of the adhesive layer (Examples 2 and 6, Examples 3 and 8). The thermal conductivity can be maintained at a desired level by adjusting the content of the inorganic filler and the thickness of the adhesive layer.

In recent years, automobile electrification has accelerated in, for example, the automotive industry. This has progressed the development of high-output and downsized (lightweight) motors. However, a high-output motor generates an increased amount of heat. As the amount of generated heat increases, the components of the motor are required to have higher heat resistance. When the motor exceeds its heat resistance limit, the electrical resistance increases, possibly resulting in, e.g., a decreased energy efficiency and a decreased output of the motor. As the amount of heat generated from the coil wire in the stator of the motor is likely to increase in the future, the motor is demanded to have such a performance as to efficiently transfer the generated heat to the core via the insulating sheets disposed in the slots. That is, the insulating sheet is desired to have good thermal conductivity.

Industrial Applicability

The insulating sheet of the present invention is suitably used, for example, as a component of a motor. The insulating sheet of the present invention is suitably used by being provided in, for example, a motor.

REFERENCE SIGNS LIST

    11: Substrate layer
    12: Adhesive layer
    13: Outer layer
    10: Insulating sheet

## Claims

1. An insulating sheet comprising: two outer layers disposed to be opposed to each other; two adhesive layers disposed to be opposed to each other between the two outer layers; and a substrate layer disposed between the two adhesive layers, wherein
the two adhesive layers both comprise an inorganic filler.

2. The insulating sheet according to claim 1, wherein each of the two adhesive layers comprises 20 volume % or more and 50 volume % or less of the inorganic filler.

3. The insulating sheet according to claim 1 or 2, wherein the inorganic filler has a particle shape being a spherical shape.

4. A motor comprising the insulating sheet according to claim 1 or 2.

F i g . 1

F i g . 2

## INTERNATIONAL SEARCH REPORT

| International application No. |
| --- |
| **PCT/JP2024/022794** |

### A. CLASSIFICATION OF SUBJECT MATTER

**H01B 17/56**(2006.01)i; **C09J 7/22**(2018.01)i; **C09J 7/29**(2018.01)i; **C09J 7/30**(2018.01)i; **C09J 7/38**(2018.01)i; **C09J 11/04**(2006.01)i; **C09J 201/00**(2006.01)i
FI: H01B17/56 A; C09J7/30; C09J7/22; C09J201/00; C09J11/04; C09J7/29; C09J7/38

According to International Patent Classification (IPC) or to both national classification and IPC

### B. FIELDS SEARCHED

Minimum documentation searched (classification system followed by classification symbols)

H01B17/56; C09J7/22; C09J7/29; C09J7/30; C09J7/38; C09J11/04; C09J201/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2022-185658 A (MITSUBISHI ELECTRIC CORPORATION) 15 December 2022 (2022-12-15)<br>paragraphs [0009], [0023], [0055], [0105], fig. 2 | 1-4 |
| A | JP 2006-262687 A (NITTO SHINKO KK) 28 September 2006 (2006-09-28)<br>entire text, all drawings | 1-4 |
| A | JP 2013-6999 A (NITTO SHINKO KK) 10 January 2013 (2013-01-10)<br>entire text, all drawings | 1-4 |
| A | WO 2016/163514 A1 (TERAOKA SEISAKUSHO CO., LTD.) 13 October 2016 (2016-10-13)<br>entire text, all drawings | 1-4 |

☐ Further documents are listed in the continuation of Box C.   ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **14 August 2024** | **27 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/022794**

| Patent document cited in search report | | | Publication date (day/month/year) | Patent family member(s) | | | Publication date (day/month/year) |
|---|---|---|---|---|---|---|---|
| JP | 2022-185658 | A | 15 December 2022 | CN | 115506177 | A | |
| JP | 2006-262687 | A | 28 September 2006 | (Family: none) | | | |
| JP | 2013-6999 | A | 10 January 2013 | (Family: none) | | | |
| WO | 2016/163514 | A1 | 13 October 2016 | US entire text, all drawings | 2018/0134926 | A1 | |

**EP 4 723 144 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023107332 A
- JP 2006262687 A